**Europäisches Patentamt**

**European Patent Office**

**Office européen des brevets**

(19)

(11) Veröffentlichungsnummer: **0 173 000**
**A2**

## (12) EUROPÄISCHE PATENTANMELDUNG

(21) Anmeldenummer: **85106434.5**

(22) Anmeldetag: **24.05.85**

(51) Int. Cl.⁴: **A 21 B 1/48,** A 21 C 9/08

(30) Priorität: **28.08.84 DE 3431552**

(43) Veröffentlichungstag der Anmeldung: **05.03.86**
**Patentblatt 86/10**

(84) Benannte Vertragsstaaten: **AT CH DE IT LI**

(71) Anmelder: **Hess-Brot GmbH, Breitendieler Strasse 18, D-8760 Miltenberg/Main (DE)**

(72) Erfinder: **Dolger, Eugen, Wiesenweg 38, D-6982 Freudenberg (DE)**

(74) Vertreter: **Schöning, Hans-Werner, Dipl.-Ing., RECHTSANWÄLTE Dr. Harmsen, Dr. Utescher Dipl.-Chem Harmsen, Bartholatus Dr. Schaeffer, Dr. Fricke, Wolter PATENTANWÄLTE Dr. Siewers, Dipl.-Ing. Schöning Adenaerallee 28, D-2000 Hamburg 1 (DE)**

(54) **Vorrichtung zum Beschicken eines Netzband-Backofens.**

(57) Um die von einer Gäranlage kommenden Teigstücke auf das Netzband eines durchlaufend arbeitenden Backofens lagerichtig abzusetzen, schlägt die Erfindung vor, die einzelnen über Kopf angelieferten Teigstücke mit einem motorisch angetriebenen Kipptrog zu wenden und zum Netzband des Ofens weiterzubefördern, wobei dieser Kipptrog an der Unterseite des Gärofen-Übergabekopfes hängend angebracht wird.

EP 0 173 000 A2

## Vorrichtung zum Beschicken eines
## Netzband-Backofens

Die Erfindung betrifft eine Vorrichtung zum lagerichtigen Absetzen der von einer Gäranlage kommenden Teigstücke auf das Netzband von Backöfen, wie sie in Großbäckereien üblich sind.

Die bisher bekanntgewordenen Abkippvorrichtungen der vorgenannten Art wurden im allgemeinen als eigenständige Komponenten zwischen den Gärofen und den Backofen gestellt. Diese Vorrichtungen sind außerordentlich sperrig und benötigen eine Stellfläche von 6 bis 7 m$^2$; sie müssen bei Verwendung des Backofens ohne Gärofen von diesem entfernt werden, um an den Ofeneinlauf zu kommen. Bei diesen Kippvorrichtungen sind Ablegebänder vorgesehen, die aufgrund der unterschiedlichen Ablaufgeschwindigkeiten von Netzband und Ablageband die Teigstücke unterschiedlich weit auseinandergezogen oder zusammengeschoben positionieren. Da die bisher verwendeten Ablagebänder in einem geringen Abstand von ca. 1 bis 5 cm unmittelbar über dem Netzband laufen, sind sie relativ hohen Temperaturen ausgesetzt.

so daß die vorhandenen Kunststoffleitungen einer pneumatischen Anlage und die Zylinderdichtungen der Betätigungsvorrichtungen durch die auftretenden hohen Temperaturen verspröden und brechen.

Aufgabe der Erfindung ist die Schaffung einer verbesserten Abkippvorrichtung, die die vorerwähnten Nachteile ausschaltet und zu einem äußerst gedrungenen Aufbau führt, welcher außerordentlich störunanfällig ist und vor allem sehr viel weniger Raum benötigt.

Zur Lösung der vorgenannten Aufgabe ist die erfindungsgemäße Abkippvorrichtung dadurch gekennzeichnet, daß hängend an der Unterseite des das Netzband überkragenden Übergabekopfes der Gäranlage in geringem Abstand über dem Netzband auf einer elektromotorisch bewegbaren Kippwelle ein dem von der Gäranlage kommenden Teigstück angepaßter Trog angeordnet ist, der in einer ersten Stellung das kopfstehend abgeworfene Teigstück aufnimmt und nach einer Verkippung von etwa 90° in einer zweiten Stellung das Teigstück um 180° gewendet auf dem Netzband ablegt.

Vorzugsweise sind der Trog und sein Kippantrieb relativ verstellbar mit dem Übergabekopf der Gäranlage verbunden.

Weitere Einzelheiten und Merkmale der Erfindung ergeben sich aus den Unteransprüchen.

Nachfolgend wird anhand der beigefügten Zeichnungen eine bevorzugte Ausführungsform einer erfindungsgemäßen Abkippvorrichtung im einzelnen beschrieben.

3

In den Zeichnungen zeigen:

Fig. 1    eine axiale Ansicht auf die erfindungsgemäße
Abkippvorrichtung,

Fig. 2    eine der Fig. 1 entsprechende Darstellung der
Kippvorrichtung in Verbindung mit Netzbandofen und Gäranlage in verkleinertem Maßstab
und

Fig. 3    eine schematische um 90$^{\circ}$ versetzte Ansicht zu
Fig. 2.

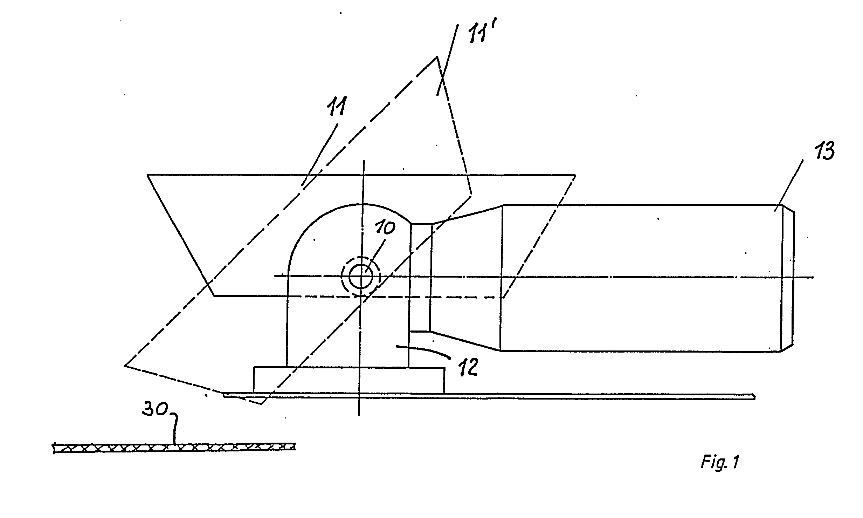

Das Kernstück der Erfindung ist der in Fig. 1 schematisch
dargestellte Kipp-Trog, welcher die Verbindung zwischen
dem Ausgang der Gäranlage und dem Eingang des Netzband-
Ofens bildet.

Wie die Fig. 1 zeigt, befindet sich in geringem Abstand
oberhalb des Netzbandes 30 ein Trog 11, welcher mittels
einer Kippwelle 10 so gelagert ist, daß er von der Stellung
11 in die mit gestrichelten Linien eingezeichnete Stellung
11' verkippen kann. Der an der Oberseite offene Trog empfängt
in nachfolgend noch näher zu beschreibender Weise ein kopfstehend aus der Gäranlage abgekipptes Teigstück, welches
dann nach einer Verkippung des Troges 11 um weitere 180$^{\circ}$
gewendet auf dem Netzband 30 des Ofens abgesetzt werden kann.
Die den Trog 11 tragende Kippwelle 10  ist im Bereich der
Trogenden in Wellenlagern 12 abgestützt. In der Nähe des
einen Wellenlagers ist die Welle 10 mit einem angeflanschten
Getriebemotor 13 verbunden. Die Steuerung dieses Motors 13 ist nicht im einzelnen dargestellt, denn es ist für den Fachmann selbstverständlich, daß der Arbeitstakt dieses Motors einstellbar sein muß und daß es zweckmäßig ist, den Kippweg des Troges stufenlos einstellbar zu machen.

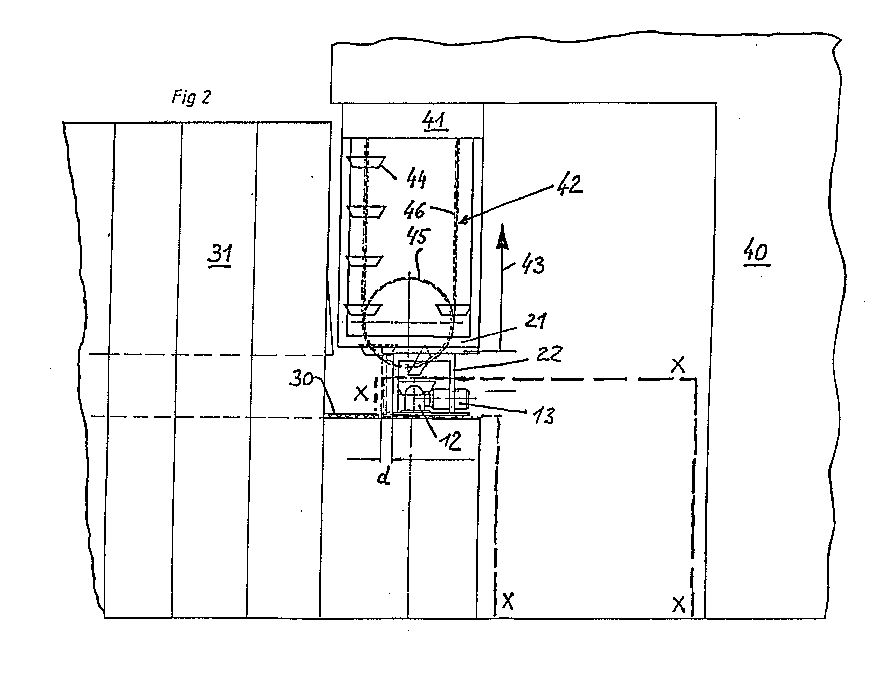

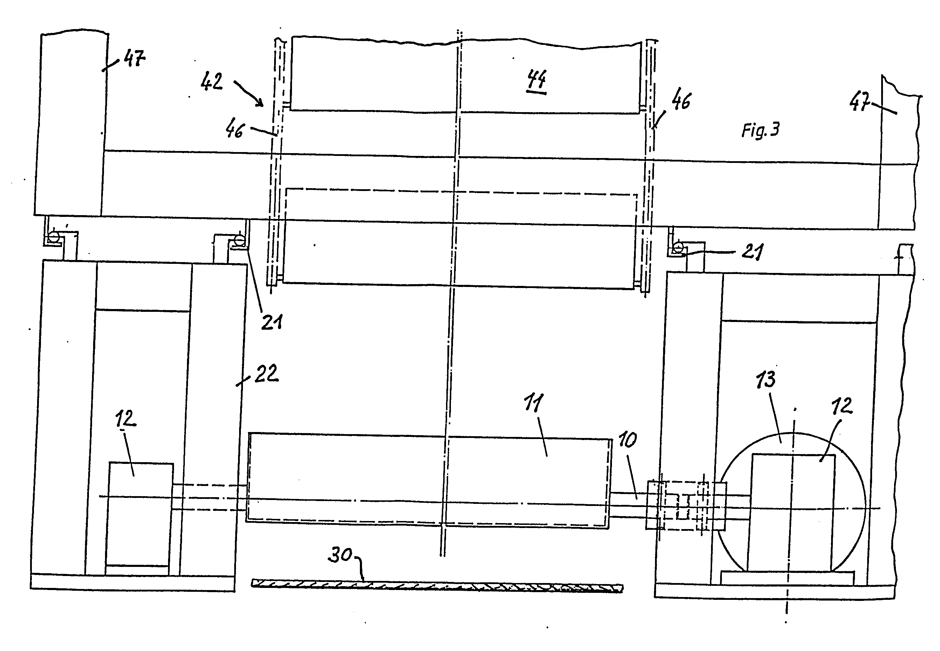

Die Fig. 2 gibt in einem verkleinerten Maßstab einen Gesamtüberblick. In der linken Hälfte der Fig. 2 befindet sich der Netzbandofen 31, von dem lediglich das in Tischhöhe laufende Netzband 30 angedeutet ist. In der rechten Hälfte der Fig. 2 befindet sich die Gäranlage 40, die mit ihrem Übergabekopf 41 das Einlaufende des Netzbandofens 31 überragt. Am Übergabekopf 41 der Gäranlage befindet sich ein Paternosterwerk 42, mit dem die einzelnen aus dem Gärofen kommenden Teigstücke einzeln mit Gondeln 44 herausgefahren werden. Wie die etwas größere Darstellung gemäß Fig. 3 zeigt, hängen die einzelnen Gondeln 44 an zwei parallellaufenden endlosen Ketten 46. Am unteren Ende sind diese Ketten 46 über Kettenräder 45 geführt. Im Bereich dieser Kettenräder 45 befinden sich auch Anschläge, die dafür sorgen, daß die jeweils im Tiefpunkt des Paternosterwerkes 42 stehende Gondel 44 um fast 90$^\circ$ gekippt wird, so daß das in der Gondel 44 mitgeführte Teigstück herausrutscht und kopfstehend herunterfällt und dann in dieser kopfstehenden Lage aufgefangen werden muß.

Die Teigstücke dürfen selbstverständlich nicht in der Überkopf-Stellung in den Ofen eingefahren werden, so daß eine zweite Kippvorrichtung benötigt wird, die erfindungsgemäß so ausgebildet ist, wie Fig. 1 zeigt. An dem Rahmen 47 des Übergabekopfes 41 befinden sich an der Unterseite Schienen 21, in denen erfindungsgemäß die Kipptrog-Anordnung gemäß Fig. 1 aufgehängt ist. Die an den beiden Enden der Kippwelle 10 vorgesehenen Wellenlager 12 stützen sich auf Rahmenteilen 22 ab, die mit Flanschen- oder Rollen-Ansätzen in die Schienen 21 eingreifen. Dank dieser Schienen lassen sich die Wellenlager 12 und damit die Welle 10 und der Trog 11 in Querrichtung um den in Fig. 2 mit d bezeichneten Weg verschieben, um eine Anpassung an unterschiedlich große Teigstücke, unterschiedliche Teiggewichte und sonstige Faktoren zu ermöglichen. Eine Auf- und Abbewegung entsprechend dem in Fig. 2 eingezeichneten Pfeil 43 ist ebenfalls möglich, wenn, wie vorgesehen, der Rahmen 47 der Güranlage im Übergabekopf 41 auf- und abfahrbar ist.

Die erfindungsgemäße Vorrichtung arbeitet wie folgt. Bei in Betrieb befindlicher Anlage läuft das Netzband 30 des Ofens 31 kontinuierlich um und ist somit bereit, nebeneinanderliegend die zu backenden Teigstücke aufzunehmen. Die Güranlage 40 liefert an ihrem Übergabekopf 41 ein Teigstück nach dem anderen mittels der Gondeln 44 aus, welches bei einer Verkippung der Gondel 44 im Bereich der unteren Umlenkung aus der Gondel 44 herausfällt und überkopfstehend im Trog 11 landet. Dieser Trog 11 mit dem kopfstehenden Teigstück wird dann mit Hilfe seines Kippantriebes in die in Fig. 1 in gestrichelten Linien angedeutete Lage 11' gebracht, so daß das Teigstück erneut um 180$^\circ$ gewendet und auf dem Netzband 30 abgesetzt bzw. abgekippt wird. Verständlicherweise ist die Umlaufgeschwindigkeit des Kettentriebes 45/46 auf den Arbeitstakt des Kipptroges 11 abgestimmt, damit sichergestellt wird, daß der Trog 11 wieder in seine aufnahmebereite Stellung gelangt, wenn die nächste Gondel 44 abgekippt wird.

In der Fig. 2 befindet sich eine dick gestrichelte Linie X-X, die den Raumbedarf der bisherigen zwischen Ofen 31 und Güranlage 40 aufzustellenden zweiten Kippvorrichtung andeutet. Dieser gesamte Raum innerhalb der Fläche X-X steht jetzt frei zur Verfügung, da die gesamte zweite Kippvorrichtung hängend unterhalb des Übergabekopfes 41 angeordnet werden kann.

Patentansprüche

1. Vorrichtung zum lagerichtigen Absetzen der von einer
   Göranlage kommenden Teigstücke auf das Netzband
   eines durchlaufend arbeitenden Backofens, dadurch
   gekennzeichnet, daß an der Unterseite des das Netzband (30) überkragenden Übergabekopfes (41) der Gäranlage (40) hängend in geringem Abstand über dem
   Netzband (30) auf einer elektromotorisch bewegbaren
   Kippwelle (10) ein dem von der Göranlage (30)
   kommenden Teigstücken angepaßter Trog (11) angeordnet ist, der in einer ersten Stellung das kopfstehend abgeworfene Teigstück aufnimmt und nach
   einer Verschwenkung von etwa 90$^\mathrm{o}$ in einer zweiten
   Stellung (11') das Teigstück um 180$^\mathrm{o}$ gewendet auf
   das Netzband (30) abkippt.

2. Vorrichtung nach Anspruch 1, dadurch gekennzeichnet,
   daß der Trog (11) und sein Kippantrieb (10,13) höhenverstellbar (43) mit dem Übergabekopf (41) der Gäranlage (40) verbunden sind.

3. Vorrichtung nach Anspruch 1 und 2, dadurch gekennzeichnet, daß der Trog (11) und sein Kippantrieb (10,13)
   in Tragschienen (21) hängend relativ zum Übergabekopf
   (41) der Göranlage (40) beweglich sind.

4. Vorrichtung nach Anspruch 1 bis 3, dadurch gekennzeichnet, daß die Kippwelle (10) beidseitig des Troges
   (11) gelagert ist und die Kippwellenlager (12) mit
   dem Übergabekopf (41/47) der Göranlage (40) verbunden
   sind.

5. Vorrichtung nach Anspruch 1 bis 4, dadurch gekennzeichnet, daß der Kippantrieb ein am einen Ende der
Kippwelle (10) angeflanschter Getriebemotor (13)
ist.

0173000

9/11

Fig. 1

12

13

10

11

11'

30

Fig 2

41

44
42
46
45
43

31    40

21
22
13
12

30

X
X
X
X

d

1/1

0173000

Fig. 3